# EUROPEAN PATENT APPLICATION

(11) **EP 1 884 711 A1**
(43) Date of publication of application: **06.02.2008**
(21) Application number: 06380224.3
(22) Date of filing: 02.08.2006
(51) Int. Cl.: F21V 33/00, F21Y 101/02

(54) **Luminous device**

(71) Applicant: Hoffmann, Friedemann, E-08850 Gava (Barcelona) (ES)
(72) Inventor: Hoffmann, Friedemann, E-08850 Gava (Barcelona) (ES)
(74) Representative: Gonzalez Gonzalez, Pablo

(57) **Abstract**

The device consists of some luminous elements (51, 52), LED's, which are connected to a housing (1), facing downwards and upwards and/or on the outside of the housing. Light is projected by these luminous elements (51, 52) downwards onto a table or similar object, since the housing (1) has a central opening (11), containing some plugs (2) for anchoring the housing (1) around a tubular element such as the shaft (3) of a sunshade or similar object. The housing has power batteries (53), a switch (55) and a connector (54) for recharging the batteries (53) by means of an external transformer (6) or photovoltaic solar panel (8). The housing (1) may be formed by two sectors (12, 13) that are joined together or a single body with a lateral passage.

## Description

### Object of the invention

The present invention refers to a luminous device created especially for mounting on, although not limited to sunshade supports or other similar supports.

### Background of the invention

During the summer it is customary to use to tables set out on terraces for having drinks or meals, and it is usual for these tables to have a sunshade to protect them from the sun during the day and provide greater comfort at night.

However, their use at night entails the serious problem of insufficient light, especially when they are used for dining, having a drink or carrying out any other activity that requires sufficient light.

Among the different solutions that have been proposed is fixing a conventional electric light inside the sunshade or awning. This causes a problem since installing it makes it impossible to open and close the sunshade and also requires an extension cable to the interior of the premises or house.

Another solution consists of hanging a lantern or similar device from the sunshade that is fuel-operated, for example, paraffin, alcohol or bottled gas. These lamps are very hazardous due to the risk of fire, and the fumes they give off, in addition to which they generate a lot of heat, which is precisely what people want to avoid when they are enjoying the cool night atmosphere.

Yet another solution is to place electric lights near the sunshade, so that they illuminate the area from outside. However, it is difficult to ensure the stable anchoring of these lights and they do not always guarantee that the light is properly aimed at the table or area to be illuminated.

Devices exist such as lanterns and similar device that are battery-operated. These devices consist of a housing with a series of electric luminous elements, rechargeable batteries, a switch and a connector to an outside transformer for recharging the batteries In the case of this device being of the lantern type, the reflector concentrates the light in a beam of light that is excessively narrow and intense, causing uneven illumination of the table surface. In the case of the device being of the lamp type, it must be placed on the table to obtain good illumination, which makes it a hindrance. If the device is raised, it is difficult to anchor and projects a shadow underneath.

### Description of the invention

The luminous device described in this invention has a series of technical features that enable it to be easily and quickly placed on the shaft of a sunshade or similar support to project the appropriate amount of light on a table or area to be illuminated.

In accordance with the invention, the device has a housing with a central opening or central passage in which are some plugs for anchoring the housing around a tubular element, such as a pole or the shaft of a sunshade, awning or similar item, fixing the housing making it easy to fit the housing and project light onto a table or surface laid underneath it.

In the first example of usage, the housing is formed by two sectors joined by at least one hinge with a closing mechanism to ensure that both sector fit around the central opening. In this way the stable placing of the luminous device on the sunshade shaft or any other vertical support is easy and fast, and done by just opening the two sectors and inserting the shaft into the central opening in the housing and then closing the two sectors of the housing again. The plugs of the opening or central passage are made of flexible material and allow for easy fitting on different diameters of the pole or support used.

Inside each of the sectors is at least one printed circuit board on which the luminous elements are fixed. These elements are focused outwards through some holes for exterior illumination. The printed circuits also include the control elements for recharging the batteries and operation. These luminous elements are preferably LED's and face downwards, forming a cone of light that illuminates the space of a conventional table. Since the light comes from an upper ringed area, it is natural and comfortable.

The device may also include luminous elements focused at the top part of the housing, projecting indirect light due to the reflection against the fabric inside the sunshade or awning, which provides a warmer atmosphere.

The closing device is formed by a hook on the side of one of the sectors that can be inserted into a hole on the side opposite the adjacent sector. That hole contains an eye bolt with a spring that is depressed by a push button outside, to allow the device to be opened whenever necessary.

The flexible plugs are partially inserted into some holes inside the central opening or passage of the housing, thereby allowing for greater movement and securing the device when fixed to a shaft.

The device includes a radio receiver connected to a loudspeaker for transmitting music and audio. For example, in the terrace of a bar a radio transmitter connected to music equipment can be used so that the music can be heard in all the devices within the range of a specific radius without the need to lay cables or install loudspeakers, since each device acts as a music broadcasting mechanism.

The device is also equipped with a decorative lighted strip laid along the perimeter of the housing. This strip consists of at least one optical fibre with two LED's at the ends for illumination purposes. The light may be of a specific wavelength so that it attracts insects in the same way as an anti-mosquito device. Together with this illuminated strip the housing has at least one adhesive band for capturing insects that are attracted by the light.

As an alternative power supply for the device, the use of a photovoltaic solar panel has been foreseen with a plug that can be connected for recharging batteries during daylight hours. In this way, there is no need to dismantle the device from its position and the upper surface of the sunshade can be used to hold the photovoltaic panel so that the batteries can be recharged during the day for use at night.

One alternative version of the housing is that of a single body with a passage running from the side to the central hole for inserting the tubular element or pole using the set of plugs. In this way the housing is stiffened and has greater resistance.

The device may also have flexible arms for anchoring the luminous elements to the housing, so that they can be moved and directed in the same way as spotlights or similar objects.

### Description of the figures

To complete the description given here, and for the purpose of making the features of the invention easier to understand, a set of illustrations is attached to the present descriptive dossier, in which the following is shown, as an example with no limitation in scope:

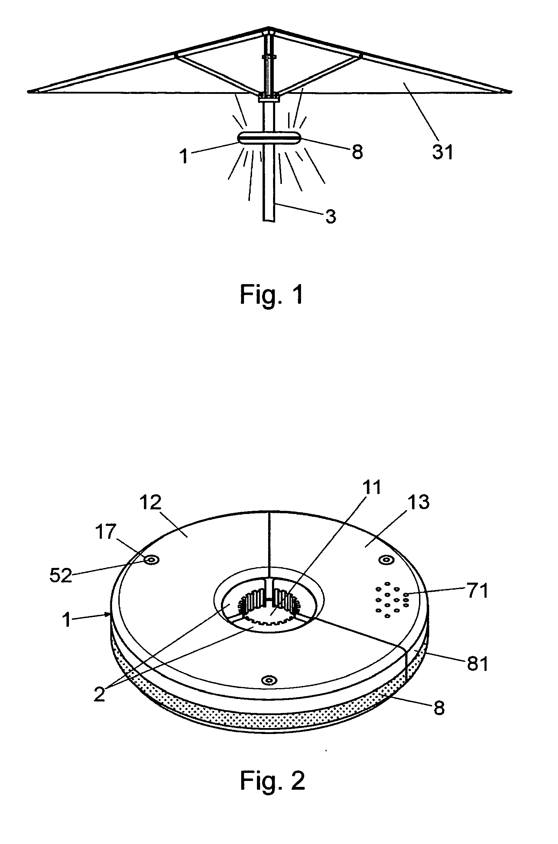

- Figure 1 shows a view of the device installed on a sunshade.
- Figure 2 shows a view from above of the device.

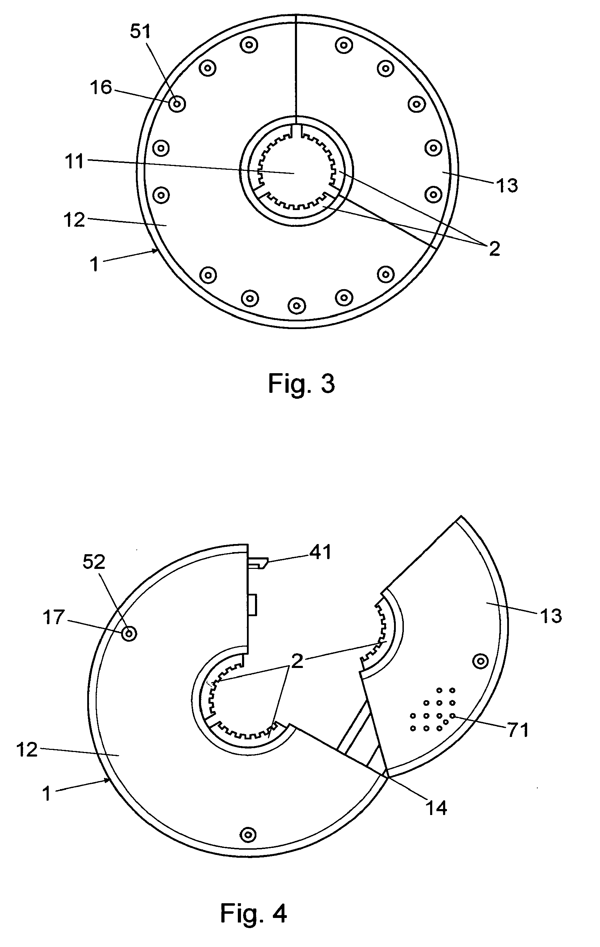

- Figure 3 shows a view from below of the device with the luminous elements.
- Figure 4 shows a plan view of the open device with both sectors separated.

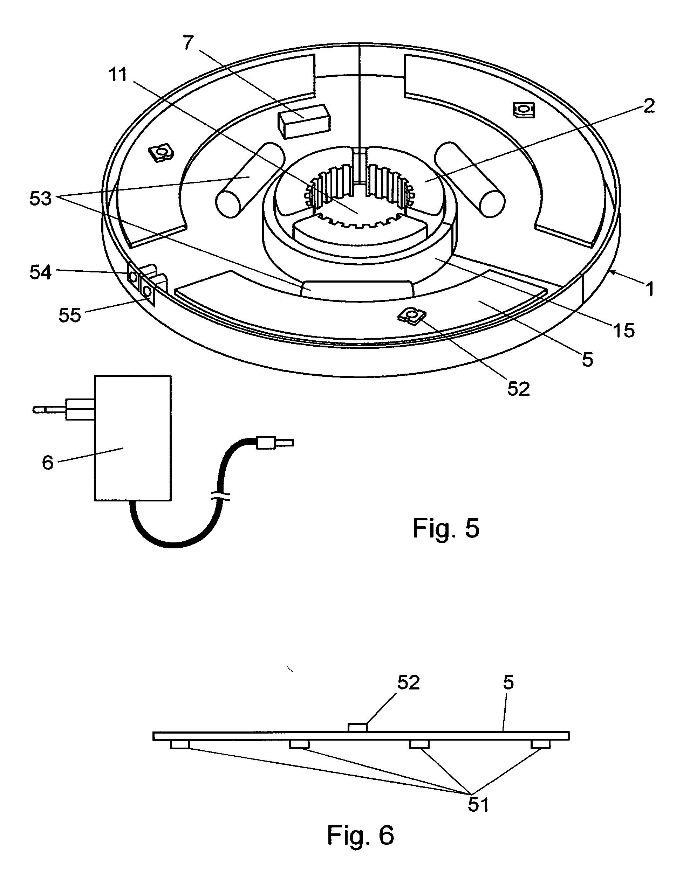

- Figure 5 shows a perspective view of the inside of the device with the boards and batteries.
- Figure 6 shows a side elevation view of the printed circuit plate with the LED diodes on both the larger sides.

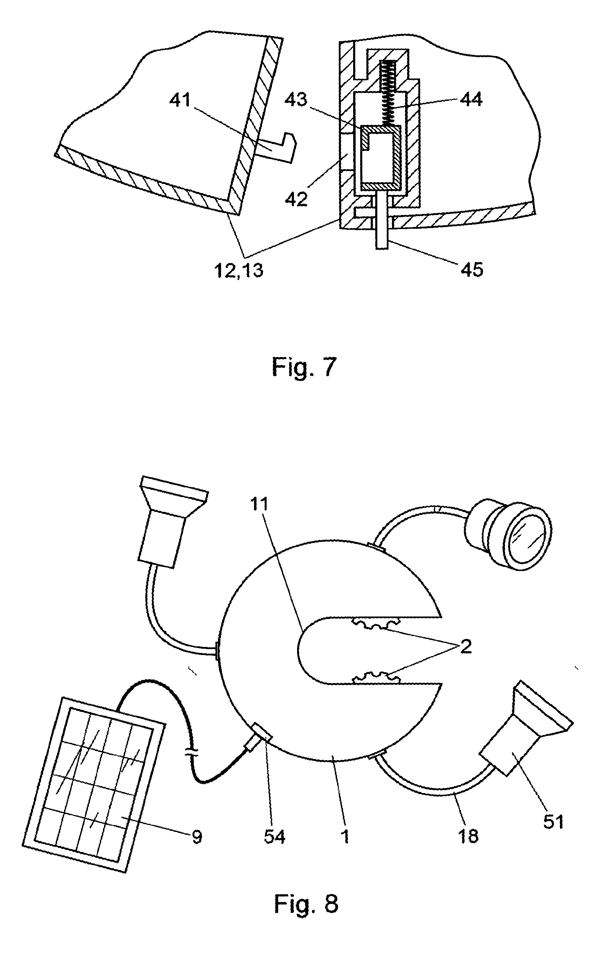

- Figure 7 shows part of the closing mechanism of both sectors of the housing.
- Figure 8 shows a plan view of an alternative version in which the housing is formed by a single body with a lateral passage running to the central opening, with the luminous elements laid out on the flexible arms that can be positioned in different directions.

### Preferred version of the invention

As can be seen in the figures referred to, the first version of the device consists of a ring-shaped (1) housing with a central opening (11) formed by two jointed sectors (12, 13) with a hinge (14), and between the sectors (12,13) there is a closing device to make the two sectors form (12, 13) around the central opening (11). The housing (1) has in its central opening (11) several flexible plugs (2) inserted into some holes (15), and these flexible plugs (2) are able to anchor the device to a shaft (3) inserted into that opening (11).

To put the device in the closed position, it has a closing mechanism consisting of a hook (41) on the side of one sector (12) that can be inserted into an opening (42) on the opposite side of the adjacent sector (13). Inside that opening (42) is an eye bolt (43) operated by a spring (44) for closing that is depressed by an outside push button (45) to release the hook (41) and allows both sectors to be opened (12, 13).

The device contains one or several printed circuit boards (5) in its interior with the control and recharging circuits in both the larger sector (12) and the smaller sector (13). On the lower side of each plate (5) are LED's that are the luminous elements (51), and each LED is focused by means of an opening (16) that is conical or convex in the housing (1) for projecting the light downwards. In turn on the upper side of each plate (5) there is at least one luminous element (52) or LED focused by means of its respective opening (17) that is conical or convex on the upper side of the housing (1) which projects indirect light by reflecting on the fabric of the top part of the sunshade (31).

Inside the housing (1) are the rechargeable batteries (53) and an external connector (54) for recharging the batteries (53) through an external transformer (6). The housing (1) also has an external switch (55) to turn the device on and off. Inside the housing (1) is a receiver (7) connected to a loudspeaker (71) on the top part, through a series of perforations for emitting audio and music that is received from a remote station (not shown) by radiofrequency.

The housing (1) has a decorative illuminated strip all along its perimeter (8). This band (8) is formed by an optical fibre with two LED's (not shown) at the ends for lighting that fibre with a wavelength that attracts insects, especially mosquitoes. The housing (1) has on its surface an adhesive band (81) next to the illuminated band (8) to capture insects attracted by the light.

In another version of the device, it is powered by a photovoltaic solar panel (9) that can be placed on the sunshade or shaft and connected to the connector (55) for recharging the batteries during daylight hours.

In addition, another alternative for the housing (1) is a single body that has a lateral passage running to the central opening (11) for the insertion of the tubular element or shaft (3) of the sunshade, and the device is anchored by a set of plugs in that opening (11). This housing may have flexible arms (18) protruding from it for anchoring the luminous elements (52), and the flexible arms (18) permit the luminous elements to be moved (52) depending on the desired illumination.

Having described the nature of the invention in sufficient detail, as well as an example of the preferred use, it is hereby recorded for the opportune purpose that the materials, shape, size and lay-out of the elements described may be modified, provided that this does not alter the essential features of the invention that is claimed below.

## Claims

1. A luminous device, of the type that includes a series of electrical luminous elements (51, 52) connected to a housing (1) that contains several rechargeable supply batteries (53), an operating switch (55) and a connector (54) for recharging the batteries (53) through an optional external transformer (6), **characterised by** the fact that the housing (1) has a central opening or passage (11) into which a support shaft or pole (3) is inserted and some plugs (2) that protrude from the inside section of the central opening or passage (11) for anchoring the housing (1) to the support shaft or pole.

2. A device as described in claim 1, **characterised by** the fact that the housing (1) is formed by two sectors (12, 13) joined by at least one hinge (14) and have a closing mechanism that ensures that the two sectors (12, 13) form around the central opening (11). Inside the two sectors (12, 13) is at least one printed circuit board (5) preferably with the control and recharging circuits, on which the luminous elements are anchored (51, 52). These are focused outwards through some holes (16, 17) for external illumination.

3. A device as described in claim 1, **characterised by** the fact that the luminous elements (51, 52) are LED's.

4. A device as described in either of claims 1 and 2, **characterised by** the fact that it has luminous elements (52) connected to the housing that are facing upwards.

5. A device as described in claim 2, **characterised by** the fact that the closing mechanism consists of a hook (41) on the side of one sector (12, 13) that can be inserted into an opening (42) on the opposite side of the adjacent sector (12, 13). In this opening (42) is an eye-bolt (43) operated by a spring (44) that is depressed by an external push button (45).

6. A device as described in claim 1, **characterised by** the fact that the plugs (2) are made of flexible material or of a flexible structure and can be adapted to the diameter of the shaft or pole (3) to which it is anchored..

7. A device as described in claim 1, **characterised by** the fact that the plugs (2) are partially inserted into a series of holes (15) inside the opening (11).

8. A device as described in claim 1, **characterised by** the fact that it has a radio receiver (7) connected to a loudspeaker (71) for broadcasting audio and music.

9. A device as described in claim 1, **characterised by** the fact that it has an illuminated decorative strip (8) along the perimeter of the housing (1).

10. A device as described in claim 9, **characterised by** the fact that the strip (8) has at least one optical fibre with two LED diodes at the ends for illumination and an anti-mosquito effect.

11. A device as described in either of claims 9 and 10, **characterised by** the fact that the housing (1) has an adhesive strip (81) on it (1) to capture insects attracted by the light of the decorative strip (8).

12. A device as described in claim 1, **characterised by** the fact that it has a photovoltaic solar panel (9) with a plug that can be connected to the connector (55) for recharging the batteries (53) during daylight hours.

13. A device as described in claim 1, **characterised by** the fact that the housing (1) is formed by a single body and has a lateral passage to the opening (11) for inserting the tubular element or shaft (3) to which it is fastened by a set of plugs (2).

14. A device as described in claim 1, **characterised by** the fact that is has flexible arms (18) for anchoring the luminous elements (52) to the housing (1) and enabling them to be moved and their direction changed.
